# EUROPEAN PATENT APPLICATION

(11) **EP 4 480 623 A1**
(43) Date of publication of application: **25.12.2024**
(21) Application number: 24166035.6
(22) Date of filing: 25.03.2024
(51) Int. Cl.: B23K 9/32, B23K 9/095

(54) **CONDITIONS-BASED TORCH MAINTENANCE SYSTEMS**

(30) Priority: 31.03.2023 US 202363456152 P; 04.03.2024 US 202418594501
(71) Applicant: Illinois Tool Works Inc., Glenview IL 60025 (US)
(72) Inventor: LIZOTTE, Ryan, Glenview, 60025 (US); WHIPPLE, Bradley Eugene, Glenview, 60025 (US)
(74) Representative: HGF

(57) **Abstract**

The present application relates to a system for torch maintenance, which includes: at least one sensor configured to monitor one or more conditions of a welding torch (102); and control circuitry configured to: receive feedback corresponding to the one or more conditions from the at least one sensor; determine that the feedback received from the at least one sensor violates one or more thresholds; and command the system to prepare for torch maintenance when the feedback violates the one or more thresholds.

## Description

### FIELD OF THE DISCLOSURE

This disclosure relates generally to robotic welding and, more particularly, to welding torch maintenance systems.

### BACKGROUND

Welding torches may require maintenance during welding operations. Welding torch maintenances systems may include a control system and sensors to improve the operational life of the welding torch.

### SUMMARY

Welding torch maintenance systems are disclosed, substantially as illustrated by and described in connection with at least one of the figures, as set forth more completely in the claims.

### BRIEF DESCRIPTION OF THE DRAWINGS

FIG. 1 illustrates an example robotic welding system to perform welding, including a robot control system, in accordance with aspects of this disclosure.
FIG. 2 illustrates an example block diagram of the robot control system, in accordance with aspects of this disclosure.
FIG. 3 illustrates an example block diagram of the welding maintenance system, in accordance with aspects of this disclosure.
FIGs. 4A-4C illustrate example welding maintenance systems in accordance with aspects of this disclosure including a camera sensor.
FIGs. 5A-5C illustrate example welding maintenance systems in accordance with aspects of this disclosure including a camera sensor.
FIGs. 6A-6B illustrate an example application of the welding maintenance system in accordance with aspects of this disclosure and for detecting thermal conditions of a welding torch.
FIGs. 7A-7B illustrate an example application of the welding maintenance system in accordance with aspects of this disclosure and for detecting a TCP of a welding torch.
FIG. 8 illustrates an example welding maintenance system flowchart, in accordance with aspects of this disclosure.

The figures are not necessarily to scale. Where appropriate, similar or identical reference numbers are used to refer to similar or identical components.

### DETAILED DESCRIPTION

For the purpose of promoting an understanding of the principles of this disclosure, reference will be now made to the examples illustrated in the drawings and specific language will be used to describe the same. It will nevertheless be understood that no limitation of the scope of the claims is intended by this disclosure. Modifications in the illustrated examples and such further applications of the principles of this disclosure as illustrated therein are contemplated as would typically occur to one skilled in the art to which this disclosure relates.

Conventional robotic control systems typically perform maintenance of welding torches based on a certain frequency, such as number of welding parts or number of welding cycles, or when there is a failure. Maintenance is then performed on the welding torch. Since unplanned maintenance can happen while welding a part and can cause a significant amount of downtime, reducing the amount of time that the welding torch is stopped to perform maintenance should be minimized, and determined ahead of time, in order to prevent unplanned downtime.

Disclosed example welding torch maintenance systems reduce the amount of time spent troubleshooting failures, reduce the complexity of unplanned maintenance, and/or improve the effectiveness or performance of welding torches.

Disclosed example systems for torch maintenance include one or more sensors configured to monitor one or more conditions of a welding torch; and control circuitry configured to: receive feedback corresponding to the one or more conditions from the one or more sensors; determine that the feedback received from the one or more sensors violates one or more thresholds; and command the system to prepare for torch maintenance when the feedback violates the one or more thresholds. In some example systems, the one or more sensors comprises a camera configured to obtain one or more images. In some example systems, the camera comprises one or more apertures and is further configured to obtain the one or more images using the one or more apertures based on the one or more conditions being monitored. In some example systems, the one or more sensors includes a camera or an optical sensor mounted on a helmet.

In some example systems, the one or more conditions is a measurement of wear of a tip bore, and the one or more thresholds corresponding to an amount of wear on the tip bore. In some example systems, the one or more conditions is a measurement of wear of a torch nozzle, and the one or more thresholds correspond to an amount of wear on the torch nozzle. In some example systems, the one or more sensors comprises a camera and the one or more conditions comprise a gap between a gooseneck and a coupling component. In some example systems, the one or more sensors is a thermal sensor configured to monitor a temperature of the welding torch. In some example systems, the one or more sensors comprises a camera configured to monitor one or more visual indicators related to a temperature of the welding torch.

In some example systems, the control circuitry is further configured to: receive a signal corresponding to the one or more visual indicators; and command the system to stop welding. In some example systems, the control circuitry is further configured to command the system to pause for maintenance after a welding procedure in response to the one or more visual indicators.

In some example systems, the one or more conditions is a tool center point measurement. In some example systems, the one or more sensors is a camera or an optical sensor configured to monitor a tool center point measurement. In some example systems, the one or more sensors is a laser configured to monitor a tool center point measurement. In some example systems, the control circuitry is further configured to provide a notification to a user when the one or more thresholds are violated. In some example systems, the control circuitry is configured to command the system to prepare the welding torch for maintenance by at least one of: sending a command to disable welding, sending a command to interrupt a welding procedure, sending a command to reset the welding procedure or the system, sending a command to position the welding torch for the maintenance that will be performed, and sending a notification to an operator.

Disclosed example welding systems include a welding torch; one or more sensors configured to monitor one or more conditions of the welding torch; and control circuitry configured to: receive feedback corresponding to the one or more conditions from the one more sensors; determine that the feedback received from the one or more sensors violates one or more threshold values; and command the welding system to prepare for torch maintenance when the feedback violates the one or more threshold values.

As used herein, the word "exemplary" means "serving as an example, instance, or illustration." The examples described herein are not limiting, but rather are exemplary only. It should be understood that the described examples are not necessarily to be construed as preferred or advantageous over other examples. Moreover, the terms "examples of the invention," "examples," or "invention" do not require that all examples of the invention include the discussed feature, advantage, or mode of operation.

As used herein, the term "welding-type system," as used herein, includes any device capable of supplying power suitable for welding, plasma cutting, induction heating, Carbon Arc Cutting-Air (e.g., CAC-A), and/or hot wire welding/preheating (including laser welding and laser cladding), including inverters, converters, choppers, resonant power supplies, quasi-resonant power supplies, etc., as well as control circuitry and other ancillary circuitry associated therewith.

As used herein, the term "welding-type power" refers to power suitable for welding, plasma cutting, induction heating, CAC-A and/or hot wire welding/preheating (including laser welding and laser cladding). As used herein, the term "welding-type power supply" and/or "power supply" refers to any device capable of, when power is applied thereto, supplying welding, plasma cutting, induction heating, CAC-A and/or hot wire welding/preheating (including laser welding and laser cladding) power, including but not limited to inverters, converters, resonant power supplies, quasi-resonant power supplies, and the like, as well as control circuitry and other ancillary circuitry associated therewith.

As used herein, the term "torch," "welding torch," "welding tool" or "welding-type tool" refers to a device configured to be manipulated to perform a welding-related task, and can include a hand-held welding torch, robotic welding torch, gun, gouging tool, cutting tool, or other device used to create the welding arc.

As used herein, the term "welding mode," "welding process," "welding-type process," "welding operation" refers to any type of welding process or welding output used, such as current-controlled (CC), voltage-controlled (CV), pulsed, gas metal arc welding (GMAW), flux-cored arc welding (FCAW), gas tungsten arc welding (GTAW, e.g., TIG), shielded metal arc welding (SMAW), spray, short circuit, CAC-A, gouging process, cutting process, and/or any other type of welding process.

As used herein, the term "welding program," "weld program," or "welding procedure" includes at least a set of welding parameters for controlling a weld. A welding program may further include other software, algorithms, processes, or other logic to control one or more welding-type devices to perform a weld.

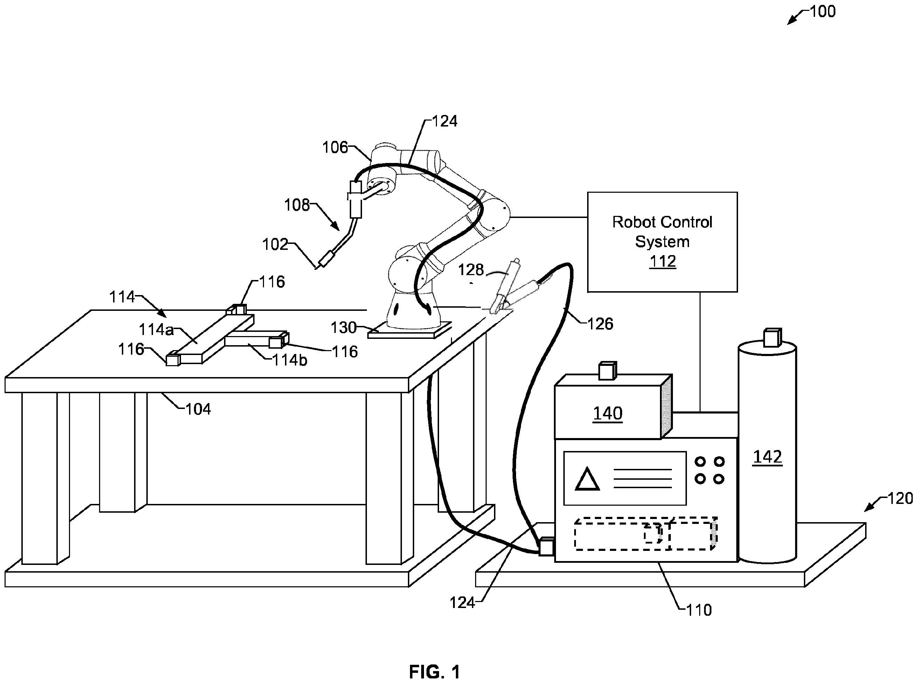

Turning to the figures, FIG. 1 illustrates an example robotic welding system 100 to perform welding. The example robotic welding system 100 of FIG. 1 includes a welding table 104, a robotic manipulator 106 configured to manipulate a welding torch 108, a welding-type power supply 110, and a robot control system 112.

The welding table 104, robotic manipulator 106, the welding torch 108, the welding-type power supply 110, and/or the robot control system 112, and/or subgroups of these components, may be packaged together (e.g., pre-assembled, pre-calibrated) to provide rapid setup of the robotic welding system 100 for welding at the end-user location. The robotic welding system 100 may be used to make repetitive welds, to leverage the consistency and repeatability advantages of the robotic manipulator 106.

In the example of FIG. 1, a workpiece 114 is positioned on the welding table 104. The workpiece 114 may include multiple components 114a, 114b which are to be welded together at one or more joints. To provide consistency in arrangement of the workpiece components 114a, 114b, the robotic welding system 100 may further include fixtures 116 attached to the welding table 104. The fixtures 116 may guide the placement of the components 114a, 114b, which can be used to consistently place the multiple components 114a, 114b.

During a welding operation or welding procedure, the robotic welding system 100 manipulates the welding torch 108, such as the illustrated welding torch, to which power is delivered by the welding-type power supply 110 via a first conductor (e.g., weld cable) 124 and returned by way of a work cable 126 and a work clamp 128 coupled to the weld table 104. The welding equipment may further include, for example, a wire feeder 140, a source of shielding gas 142, and other accessories and/or equipment. Other accessories and/or equipment may include, for example, water coolers, fume extraction devices, one or more controllers, sensors, user interfaces, and/or communication devices (wired and/or wireless).

The example robotic welding system 100 is configured to form a weld using any known electric welding techniques. Example electric welding techniques include shielded metal arc welding (SMAW), MIG, flux-cored arc welding (FCAW), TIG, laser welding, sub-arc welding (SAW), stud welding, friction stir welding, and resistance welding. In some examples, the welding-type power supply 110 and/or other welding equipment are configured to support one or more, but fewer than all, types of welding processes. To change welding processes, the welding-type power supply 110, torch 108, and/or other welding equipment may be removed (e.g., disconnected and moved away from the robotic welding system 100) and replaced by a different welding-type power supply, torch, and/or other welding equipment that supports the desired welding process. To facilitate ease of movement, the example welding equipment may be mounted or attached to a cart 120 or other conveyance (e.g., ground conveyance, hanging conveyance, etc.). Additionally or alternatively, multiple different types of welding equipment (e.g., multiple power supplies having different capabilities, multiple torches, etc.) may be co-located (e.g., proximate to a same robotic manipulator 106, on a rack of equipment, etc.) to enable rapid reconfiguration of the robotic welding system 100.

The example robotic manipulator 106 may operate using any number of degrees of freedom to manipulate the welding torch 108. For example, the robotic manipulator 106 may include multiple joints, in which each joint has one or more degrees of freedom, to achieve multiple orientations for accessing one or more weld joints on the workpiece 114. The example robotic welding system may be contained within a weld cell that is protected against intrusion by operators during robot operations (e.g., welding operations and/or other movement by the robot). In some examples the robotic welding system 100 may also configured as a cobot (e.g., a computer-controlled robotic device designed to assist a human operator), has a controller or processor, as well as one or more sensors, that are configured to operate in a manner such that humans do not necessarily need to be excluded from the area in which the robotic manipulator 106 is operating. For example, the robotic manipulator 106 may rapidly detect and respond to collisions, may operate with reduced speed and/or joint torque and/or implement other features.

The robotic manipulator 106 may be coupled to the table 104 via a base 130. Once secured, the base 130 is fixed with respect to the table 104, and may serve as a reference for position and/or orientation for the robotic manipulator 106.

The example robotic manipulator 106 and/or the example robot control system 112 are configured to transmit commands, requests, data, and/or other messages and/or communications to the power supply 110 via one or more protocols. The robotic manipulator 106 and/or the robot control system 112 are further configured to receive responses, acknowledgments, data, and/or other messages and/or communications from the power supply 110 via the one or more protocols. Based on a robotic welding procedure, the robotic manipulator 106 and/or the robot control system 112 may communicate parameters to the power supply 110 for configuration according to the robotic welding procedure, and/or adjust the welding-type process based on the variables and/or other data obtained from the power supply 110 while performing welding operations. In addition to communication with the power supply 110, the robotic manipulator 106, and/or the robot control system 112, the power supply 110, the robotic manipulator 106, and/or the robot control system 112 may communicate with other welding equipment (e.g., a welding accessory, such as the wire feeder 140, a shielding gas supply valve, a welding wire preheating system, a fume extraction system) and/or other robotic equipment.

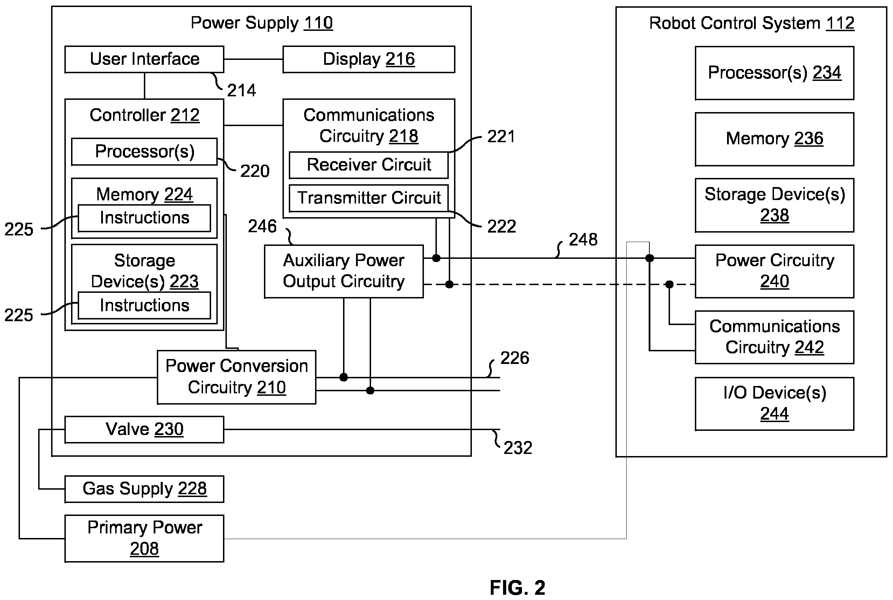

FIG. 2 is a block diagram of an example implementation of the welding-type power supply 110 and the robot control system 112 of FIG. 1. In some examples, the welding-type power supply 110 directly supplies input power to the welding torch 108. In the illustrated example, the welding-type power supply 110 is configured to supply power to welding operations and/or preheating operations. The example welding-type power supply 110 may also provide power to a wire feeder to supply electrode wire to the welding torch 108 for various welding applications (e.g., GMAW welding, flux core arc welding (FCAW)).

The welding-type power supply 110 receives primary power 208 (e.g., from the AC power grid, an engine/generator set, a battery, or other energy generating or storage devices, an outside energy source, renewable energy source, or a combination thereof), conditions the primary power, and provides an output power to one or more welding devices and/or preheating devices in accordance with demands of the system. The primary power 208 may be supplied from an offsite location (e.g., the primary power may originate from the power grid). The welding-type power supply 110 includes a power conversion circuitry 210, which may include transformers, rectifiers, switches, and so forth, capable of converting the AC input power to AC and/or DC output power as dictated by the demands of the system (e.g., particular welding processes and regimes). The power conversion circuitry 210 converts input power (e.g., the primary power 208) to welding-type power based on a weld voltage setpoint and outputs the welding-type power via a weld circuit.

In some examples, the power conversion circuitry 210 is configured to convert the primary power 208 to both welding-type power and auxiliary power outputs. However, in other examples, the power conversion circuitry 210 is adapted to convert primary power only to a weld power output, and a separate auxiliary converter is provided to convert primary power to auxiliary power. In some other examples, the welding-type power supply 110 receives a converted auxiliary power output directly from a wall outlet. Any suitable power conversion system or mechanism may be employed by the welding-type power supply 110 to generate and supply both weld and auxiliary power.

The welding-type power supply 110 includes a controller 212 to control the operation of the welding-type power supply 110. The welding-type power supply 110 also includes a user interface 214. The controller 212 receives input from the user interface 214, through which a user may choose a process and/or input desired parameters (e.g., voltages, currents, particular pulsed or non-pulsed welding regimes, and so forth). The user interface 214 may receive inputs using any input device, such as via a keypad, keyboard, buttons, touch screen, voice activation system, wireless device, etc. Furthermore, the controller 212 controls operating parameters based on input by the user as well as based on other current operating parameters. Specifically, the user interface 214 may include a display 216 for presenting, showing, or indicating, information to an operator. The controller 212 may also include interface circuitry for communicating data to other devices in the system, such as the wire feeder, the robotic manipulator 106, and/or the robot control system 112. For example, in some situations, welding-type power supply 110 wirelessly communicates with other welding devices within the welding system. Further, in some situations, the welding-type power supply 110 communicates with other welding devices using a wired connection, such as by using a network interface controller (NIC) to communicate data via a network (e.g., ETHERNET, 10baseT, 10base100, etc.).

The controller 212 includes at least one controller or processor 220 that controls the operations of the welding-type power supply 110. The controller 212 receives and processes multiple inputs associated with the performance and demands of the system. The processor 220 may include one or more microprocessors, such as one or more "general-purpose" microprocessors, one or more special-purpose microprocessors and/or ASICS, and/or any other type of processing device. For example, the processor 220 may include one or more digital signal processors (DSPs).

The example controller 212 includes one or more storage device(s) 223 and one or more memory device(s) 224. The storage device(s) 223 (e.g., nonvolatile storage) may include ROM, flash memory, a hard drive, and/or any other suitable optical, magnetic, and/or solid-state storage medium, and/or a combination thereof. The storage device 223 stores data (e.g., data corresponding to a welding application, data corresponding to sensor measurements, etc.), instructions (e.g., software or firmware to perform welding processes), images, and/or any other appropriate data. Examples of stored data for a welding application include an attitude (e.g., orientation) of a welding torch, a distance between the contact tip and a workpiece, a voltage, a current, welding device settings, and so forth. Examples of stored data corresponding to sensor measurements include thresholds or threshold ranges, captured images, uploaded images, current sensor values, previous sensor values, predicted sensor values, time of the measurements, etc.

The memory device 224 may include a volatile memory, such as random access memory (RAM), and/or a nonvolatile memory, such as read-only memory (ROM). The memory device 224 and/or the storage device(s) 223 may store a variety of information and may be used for various purposes. For example, the memory device 224 and/or the storage device(s) 223 may store processor executable instructions 225 (e.g., firmware or software) for the processor 220 to execute. In addition, one or more control regimes for various welding processes, along with associated settings and parameters, may be stored in the storage device 223 and/or memory device 224, along with code configured to provide a specific output (e.g., initiate wire feed, enable gas flow, capture welding current data, detect short circuit parameters, determine amount of spatter) during operation.

In some examples, the welding power flows from the power conversion circuitry 210 through a weld cable 226. The example weld cable 226 is attachable and detachable from weld studs at each of the welding-type power supply 110 (e.g., to enable ease of replacement of the weld cable 226 in case of wear or damage). Furthermore, in some examples, welding data is provided with the weld cable 226 such that welding power and weld data are provided and transmitted together over the weld cable 226.

In some examples, the welding-type power supply 110 includes or is implemented in a wire feeder. The example communications circuitry 218 includes a receiver circuit 221 and a transmitter circuit 222. Generally, the receiver circuit 221 receives data transmitted by the robotic manipulator 106 and/or the robot control system 112, and the transmitter circuit 222 transmits data to the robotic manipulator 106 and/or the robot control system 112.

In some examples, a gas supply 228 provides shielding gases, such as argon, helium, carbon dioxide, and so forth, depending upon the welding application. The shielding gas flows to a valve 230, which controls the flow of gas, and if desired, may be selected to allow for modulating or regulating the amount of gas supplied to a welding application. The valve 230 may be opened, closed, or otherwise operated by the controller 212 to enable, inhibit, or control gas flow (e.g., shielding gas) through the valve 230. Shielding gas exits the valve 230 and flows through a gas line 232 (which in some implementations may be packaged with the welding power output) to the wire feeder which provides the shielding gas to the welding application. In some examples, the welding-type power supply 110 does not include the gas supply 228, the valve 230, and/or the gas line 232.

The example robot control system 112 of FIG. 2 includes processor(s) 234, memory 236, one or more storage device(s) 238, power circuitry 240, communications circuitry 242, and one or more I/O device(s) 244.

The example processor(s) 234 execute instructions to configure and/or program a robotic welding procedure, and/or generates commands to execute a robotic welding procedure via the robotic manipulator 106. The processor(s) 234 may include one or more microprocessors, such as one or more "general-purpose" microprocessors, one or more special-purpose microprocessors and/or ASICS, and/or any other type of processing device. For example, the processor(s) 234 may include one or more digital signal processors (DSPs). The memory device 236 may include a volatile memory, such as random access memory (RAM), and/or a nonvolatile memory, such as read-only memory (ROM). The memory device 236 and/or the storage device(s) 238 may store a variety of information and may be used for various purposes. For example, the memory device 236 and/or the storage device(s) 238 may store processor executable instructions (e.g., firmware or software) for the processor(s) 234 to execute. In addition, one or more control regimes for various robotic manipulators and/or robotic welding procedures, along with associated settings and parameters, may be stored in the storage device(s) 238 and/or memory device 236. The storage device(s) 238 (e.g., nonvolatile storage) may include ROM, flash memory, a hard drive, and/or any other suitable optical, magnetic, and/or solid-state storage medium, and/or a combination thereof. The storage device(s) 238 store data (e.g., data corresponding to a welding application), instructions (e.g., software or firmware to perform welding processes), and/or any other appropriate data.

The power circuitry 240 converts input power to power usable by the robot control system 112 (e.g., by the processor(s) 234, the memory 236, the storage device(s) 238, communications circuitry 242, the I/O device(s) 244, and/or the robotic manipulator 106). Referring to FIG. 2, the robot control system 112 may be plugged into the welding-type power supply 110 or the primary power 208 to provide operational power to the robot control system 112 and/or the robotic manipulator 106. In some examples, the power supply 110 includes auxiliary power output circuitry 246, which converts input power (e.g., output power from the power conversion circuitry 210, primary power 208) to auxiliary power, such as a standard AC output (e.g., 120VAC or 240VAC at 50Hz or 60Hz). In such examples, the robot control system 112 can be plugged into the power supply 110 instead of the primary power, and receives the auxiliary power via an auxiliary power connection (e.g., auxiliary power conductors 248 such as an AC power cord).

The example communications circuitry 218 and the communications circuitry 242 of FIG. 2 are configured to communicate via the auxiliary power connection. In examples in which the auxiliary power conductors 248 are configured to transmit 120VAC power (or other high-voltage AC power), the communications circuitry 218 and the communications circuitry 242 may be configured to comply with the IEEE Standard 1901-2010 and/or any other power line communication standard or technique compatible with high-speed communication over the auxiliary power connection.

While establishment of communications may occur automatically using power line communications as in FIG. 2, the example welding-type power supply 110 and the robot control system 112 may also communicate via wireless communications. The example robot control system 112 and/or the power supply 110 may require initiation of pairing by the operator (e.g., via the user interface 214 and the I/O device(s) 244) to establish communication between the robot control system 112 and/or the power supply 110. For example, the operator may select a "Pair" button on each of the user interface 214 of the power supply 110 and a user interface of the robot control system 112, which then causes the communications circuitry 218 and the communications circuitry 242 to perform a pairing procedure. Upon establishing the communications channel via pairing, the power supply 110 and the robot control system 112 automatically exchange information and/or configure the power supply 110 as discussed above. In some examples, the operator may further be prompted to verify the pairing occurred between the desired power supply 110 and robot control system 112 (e.g., neither the power supply 110 nor the robot control system 112 paired with an unintended device nearby). While example powerline and wireless communications are disclosed above, the example robot control system 112 and the power supply 110 may be coupled using any communications method, including conventional methods such as a control cable.

The I/O device(s) 244 may include operator or user interfaces and/or other data interfaces. Example I/O device(s) 244 may include a keyboard, a keypad, a mouse, a trackball, a pointing device, a microphone, an audio speaker, a display device, an optical media drive, a multi-touch touch screen, a gesture recognition interface, a magnetic media drive, and/or any other operator interface devices to enable an operator to view information about the robot control system 112, the robotic manipulator 106, a robotic welding procedure, the connected power supply 110 and/or any other connected welding equipment, and/or any other information. For example, the I/O device(s) 244 may include input and/or output device(s) to control movement of the robotic manipulator 106, such as a teach pendant (e.g., a computing device executing software allowing the user to configure robotic welding procedures, welding parameters, and/or any other aspects of the robotic welding system 100) and/or dedicated programming devices positioned on the robotic manipulator 106 for use while guiding the robotic manipulator 106 in free drive mode. In other examples, the communications circuitry 242 may also include a communication interface to communicate with and control the robotic manipulator 106.

In some examples, the power supply 110 may be connected to the example robot control system 112 by plugging the robot control system 112 into the power supply 110 via the auxiliary power connection (e.g., a 120VAC outlet on the power supply). While the power supply 110 is outputting the auxiliary output power and after the robot control system 112 is powered on and initialized, the power supply 110 and the robot control system 112 may automatically pair by communicating via the auxiliary power connection or the communications circuitry 218. To perform the pairing, the power supply 110 detects, via the communications circuitry 218, that the robot control system is coupled to the auxiliary power connection. For example, the communications circuitry 218 (and/or the communications circuitry 242) outputs messages via the auxiliary power connection, which are received and/or acknowledged by the communications circuitry 242 (or the communications circuitry 218).

In response to detecting the robot control system 112 via the auxiliary power connection and receiving communications from the robot control system 112, the controller 212 configures the welding-type power supply 110. For example, upon establishing communication between the robot control system 112 and the power supply 110, the power supply 110 may transmit to the robot control system 112 information that can be used to configure the power supply 110. The robot control system 112 can then provide commands to the power supply 110 to configure the power supply 110 to perform the desired welding processes as part of a robotic welding procedure.

Example information that may be automatically transmitted to the robot control system 112 by the power supply 110 may include an: identifier of a paired welding-type power supply (e.g., a serial number, an assigned name, etc.), an identification of capabilities of a paired welding-type power supply (e.g., a listing of features and/or modifiable parameters, a model number, etc.), software instructions to facilitate control of the welding-type power supply 110 by the robot control system 112 (e.g., a software application or plug-in, software updates, software routines, an API, etc.), identification of a welding capability of the welding-type power supply (e.g., a listing of available welding processes), identification of an adjustable parameter of the welding-type power supply (e.g., parameters that are typically used by an operator, parameters that are modifiable by typically hidden from the operator, robotic welding-specific parameters, etc.) identification of a parameter limitation of the welding-type power supply (e.g., voltage limits, current limits, power limits, wire feed speed limits, frequency limits, etc.), a robotic welding procedure and/or welding-type parameters to perform the robotic welding procedure (e.g., a stored, predefined set of instructions to be implemented by the robot control system 112 to perform a robotic welding procedure), and/or any other information that may be transferred between the power supply 110 and the robot control system 112. Additionally or alternatively, the welding-type power supply 110 may transmit one or more available real-time process data streams, such as welding current measurements, output voltage measurements, wire feed speed measurements. The robot control system 112 may use real-time process data streams for other aspects of the robotic welding procedure, such as process control, seam tracking, and/or any other control.

Additionally or alternatively, the welding-type power supply 110 may transmit information about physical system needs, such as the need for physical isolation or other physical configuration to be performed by the operator, to the robot control system 112. Based on the physical configuration information, the robot control system 112 may display the physical information to an operator via a display or otherwise notify the operator of the physical requirements. Additionally or alternatively, the welding-type power supply 110 may transmit system status information about one or more components of the welding system, for display by the robot control system 112 or other action. Example welding equipment system status information may include internal temperature measurements, airflow measurements, coolant circulation information, error codes and/or other diagnostic information, and/or any other status information.

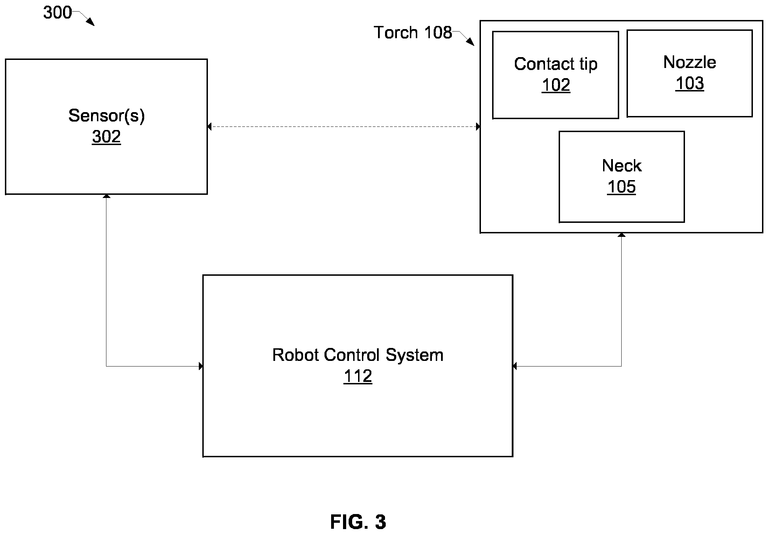

FIG. 3 is a block diagram of an example welding torch maintenance system 300 configured to prepare a welding torch 108 for maintenance. The welding torch 108 may be manipulated by, for example, a robotic manipulator 106, a collaborative robot manipulator, or manually by a welding operator. The example welding torch 108 may include a contact tip 102, a nozzle 103, a neck 105, and/or other consumables such as an insulator, a gas diffuser, etc. The example welding torch maintenance system 300 may also include the robot control system 112 and one or more sensors 302. In some examples, the welding torch 108 may be sequentially moved to positions to perform the maintenance. In some examples, the robot control system 112 may command the robotic manipulator 106 to position the torch 108 so that maintenance may be performed.

In some examples, the sensor(s) 302 may be different types of sensors, such as a camera, a laser, or other sensors that may be used to detect that the welding torch 108 requires maintenance. In some examples, the welding torch maintenance system may include one or more sensors of each type. In some examples, different types of sensors may be included, or any combination thereof. In some examples, sensor measurements can be stored in the one or more memory device(s) 236 and the one or more storage device(s) 238 and used to determine how often a sensor should perform a measurement, how often the robot control system 112 should command the system to perform a maintenance operation, etc. The sensor measurements may be included in a profile of the welding system, in a user profile, a configuration profile, etc., in order to customize the frequency of the sensor measurements. The type of sensor employed and/or frequency of measurements to capture (e.g., number of measurements, period of time, number of welds, etc.) can also be input and/or modified by the user. In some examples, the frequency of sensor measurements can be tracked and modified if the maintenance operation is commanded more than a certain deviation from the configured frequency. The frequency can be modified by tracking the sensor measurements, by machine learning, by an algorithm, and/or in response to a user command, as a list of non-limiting examples.

In some examples, the sensors 302 are used to measure characteristics of the welding torch 108. The characteristics may be, for example, a size of a contact tip bore, a tool center point (TCP), thermal conditions, etc., as non-limiting examples. In some examples, the characteristics may be used to determine condition(s) of the welding torch 108 to determine whether the welding torch 108 may require maintenance.

In some examples, maintenance of a welding torch may be replacing the contact tip, checking the neck connection, checking the TCP, reprogramming the TCP, reaming the nozzle and/or other consumables, spraying the nozzle and/or other consumables with anti-spatter spray, etc. In some examples, if a threshold and/or range of thresholds is violated, the robot control system may prepare the torch 108 for maintenance. In some examples, preparing the torch for maintenance may include sending a command to disable welding until the maintenance is performed, to stop welding immediately, to position the welding torch 108 for the type of maintenance that will be performed, and/or to notify personnel that maintenance may be needed. In some examples, the robotic control system 212 may command the welding torch to an area for a contact tip replacement and/or to inspect the torch neck, to a laser to check TCP, to an area to reprogram the TCP, to the reamer to perform a reaming operation, and/or to the sprayer to perform a spraying operation, etc.

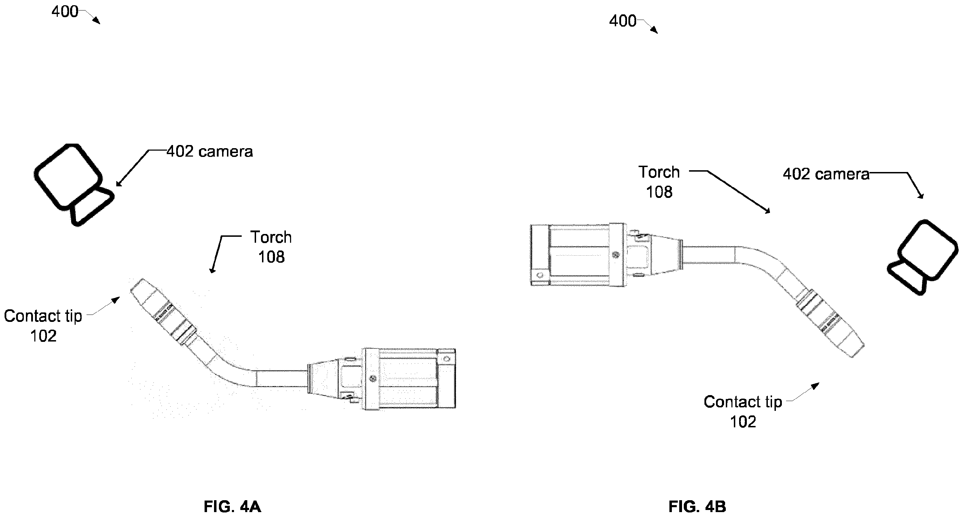

FIGs. 4A-4C illustrate example welding maintenance systems 400 in accordance with aspects of this disclosure including one or more camera sensor(s). In some examples, the camera(s) may include one or more adjustable lenses, filters, and/or other optical components for capturing electromagnetic waves in one or more spectra, such as, for example, thermal, infrared, visible, ultraviolet, as non-limiting examples. In some examples, the camera(s) may implement stereoscopic tracking and/or capture stereoscopic images.

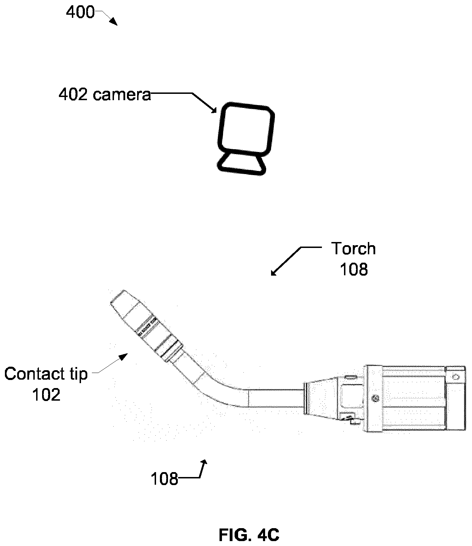

In some examples, the camera 402 may be used to observe characteristics of objects, such as the contact tip 102, nozzle 103, etc., as illustrated in FIGs. 4A and 4B. In some examples, the camera 402 may be used to observe characteristics of the welding torch 108, a tool center point of the torch 108, a positioning of the neck, etc., as illustrated in FIG. 4C. In some examples, the camera 402 may capture one or more reference images of the objects (such as the contact tip 102, nozzle 103, and/or neck 105, etc.) or features of the objects (such as a contact tip bore size and/or thermal indicators, etc.) and compare subsequent images of the objects or features to the reference image(s). The images may be stored in the one or more memory device(s) 236 and the one or more storage device(s) 238 as described above with regards to FIG. 2.

In some examples, the camera 402 may capture a reference image of the reference objects or features and compare subsequent images of the reference objects or features to the reference image. In some examples, a reference image is captured in order to establish a baseline of one of more characteristics of the welding torch 108. In some examples, any previously captured image may be designated as a reference image. Two or more images may be compared to one another, such that characteristics can be compared over a period of time to gauge changes in a condition of the welding torch 108.

In some examples, the camera may calculate values of the characteristics from the reference images and the subsequent images and make a comparison of those values in order to determine whether the characteristics of the torch 108 or parts of the torch 108 violate a threshold or remain within a threshold range. In some examples, the characteristics may be, for example, the amount of wear of a contact tip 102, the size of a contact tip bore, etc. In some examples, values can be calculated from the characteristics, for example, establishing a reference point, and measuring properties of the reference point, such as number of pixels within a contact tip bore/opening, number of pixels outside of the opening, the width, or radius of the opening, etc.

In some examples, the threshold(s) and/or range of thresholds permitted may be configurable by a user and may vary based on the type of weld, welding procedure, welding application, etc. being performed. The threshold(s) or range of thresholds may also be modified based on machine learning algorithms that track welding usage information for a particular welding operation, a particular user, a particular welding machine, etc. and determine a threshold value or range of values for the characteristics, and/or a number of welding parts that should be made before a maintenance operation is commanded by the robot controller system 212. The threshold value or range of values may be configurable by a user and may vary based on the type of weld being performed. The threshold or range of thresholds may also be modified based on machine learning algorithms that track welding usage information for a particular welding operation, a particular user, a particular welding machine, a particular sensor, etc., and determine a threshold value or range of threshold values, a number of welding parts that may be completed before the maintenance operation is commanded, etc. Multiple thresholds and/or ranges of thresholds may be configured for the characteristics and/or the sensors, and each threshold and/or range of threshold may indicate different types of maintenance that may be performed. In some examples, a first threshold and/or range of thresholds may indicate to the robot control system 112 that maintenance should be performed after a welding procedure and/or program is completed. In some examples, a second threshold and/or range of thresholds may indicate that a welding procedure and/or program should be interrupted and/or reset. In some instances, a threshold and/or range of thresholds may indicate that the robot welding system 100 should be reset.

In some examples, the camera 402 and/or the torch 108 may be positioned by the robotic manipulator 106, by another robotic system, and/or by an operator to capture images of the object or features at a preprogrammed, fixed distance from the torch 108. In some examples, the camera 402 may be positioned by the robotic manipulator 106 to capture a certain portion of the torch 108, such as the contact tip 102, the nozzle 103, the neck 104, etc. In some examples, the camera 402 may be mounted on a helmet or may be mounted on a helmet in addition to being positioned at other locations or mounted near the welding system. In some examples, the camera 402 may be positioned in a downward facing direction and/or include an enclosure to protect the camera from dust, debris, or other matter that can cause buildup on the camera lens or other camera components. The enclosure may also help provide a high-contrast background in order for differences in the captured images to be more apparent. In some examples, the high contrast background allows measurements between different images of the objects or features to be clearer and therefore more accurate. In some examples, the camera 402 and the camera enclosure may have different-sized apertures to facilitate capturing images of objects or features of varying shapes and sizes. For example, in FIG. 4A and 4B, a smaller aperture of the enclosure may be used in order to capture smaller objects, such as the contact tip 102, and a larger aperture for the enclosure may be used to capture a larger portion of the welding torch 108 or the complete welding torch 108 as shown in FIG. 4C.

In some examples, the camera 402 may be configured to capture images for comparison of characteristics at a certain frequency, such as after welding every 5 parts, 20 parts, 50 parts, etc. In some examples, the camera 402 may be configured to capture images based on a triggering event. For example, the triggering event may be when a gate of a welding cell including the welding system opens or closes, when a part, such as a contact tip 102 or nozzle 103, is replaced, and/or when there is another change to the torch 108. In some examples, a cycle counter may be used to determine how often the images of the torch 108 should be captured.

In some examples, an image capture rate may be calculated and used to determine the frequency at which the camera will capture images of the torch or features of the torch 108. The capture rate may be an observed rate based on objects or features detected in the captured images or may be a rate set by the user. In some examples, the frequency of the captured images may be modified based on the detected objects and/or features. In some examples, if images are captured more frequently, the rate can be increased. In some examples, if the images are captured less frequently, the rate can be decreased. In some examples, a threshold or range of thresholds may be set for the image capture rate. For example, if a deviation from the image capture rate is not within a certain threshold or range of thresholds, the robot control system 112 may command the robot manipulator 106 to set a new capture rate, to disable welding operations, and/or to perform a maintenance operation on the torch 108. In some examples, the threshold of the image capture rate can be a deviation of approximately 20% or more. In some examples, the change or a rate of change in the observed image capture rate may indicate that a maintenance operation should be performed on the torch 108. In some examples, the image capture rate can be tracked over time or based on usage or number of parts completed, and the rate can be modified based on observed usage over time. In some examples, the camera may capture an image after maintenance is performed to verify that the maintenance is performed, and/or to verify that no thresholds are being violated.

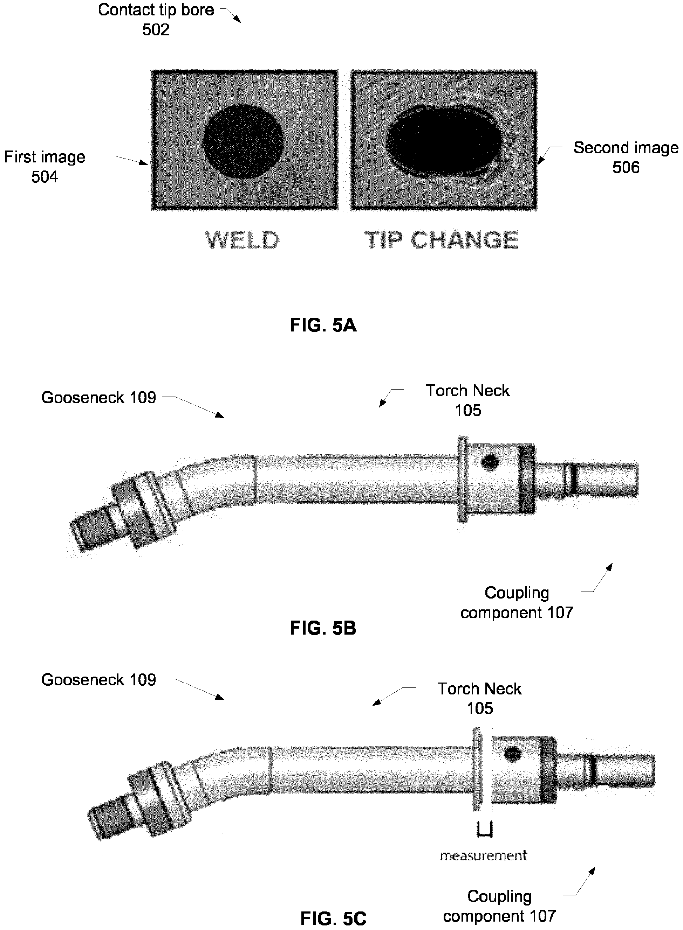

FIG. 5A-5C illustrate example applications of the welding maintenance system including one or more camera sensors as depicted in FIGs. 4A-4C. In some examples, in order to capture an image of a contact tip bore 502, an electrode wire of the contact tip 102 may need to be retracted. In some examples, a first image 504 may be captured of the contact tip bore 502, where the first image 504 is a reference image that establishes a baseline for the contact tip bore 502. In some examples, the first image may also be loaded onto the system and/or may include information related to the desired characteristics for a contact tip bore 502. Subsequent images, such as second image 506, can be taken of the contact tip bore 502 and once the bore 502 has increased by a certain threshold, as determined from the subsequent image(s) 506, the robot control system 112 may command the robot manipulator 106 to disable welding in order for the contact tip 102 to be replaced.

In some examples, a measurement is taken based on the first image 504 of the contact tip bore 502. In some examples, a subsequent image 506 is taken and new measurements are calculated based on the subsequent image(s) 506. Once a threshold wear is achieved, an output signal is sent to the robot control system 112 requesting a contact tip change. In some examples, the threshold wear may be 110% or more. In some examples, the threshold range may be 110% to 200%, or more. In some examples, the threshold is set by the user. In some examples, the threshold or threshold ranges are customizable and based on the welding type and/or welding application. In some examples, the robot control system 112 commands the welding torch to position the welding torch in a certain position in order for the contact tip to be changed.

In some examples, an image is captured of a nozzle tip. In some examples, subsequent images and/or measurements from subsequent images are compared to the captured image and/or a reference image of the nozzle tip. In some examples, if the subsequent images and/or measurements reflect a decrease that violates one or more thresholds or ranges of thresholds, the robot control system may 112 may command the robot manipulator to disable welding in order for the nozzle to be replaced.

In some examples, a measurement may be taken by the camera(s) of various components of the welding torch 108 in order to ensure that the components are properly fitted. Referring to FIGs. 5B and 5C, for example, a torch neck 105 is depicted. In some examples, an image may be captured of a torch neck 105 that is properly fitted as illustrated in FIG. 5B. In some examples, a measurement may be calculated from the image of the properly fitted torch neck 105 including the coupling component 107 and the gooseneck 109. In some examples, a subsequent image may be taken of the coupling component 107 and the gooseneck 109 and compared to the image of the torch neck 105 of FIG. 5B. In some examples, a measurement may be calculated from the subsequent image. In some examples, the measurements may be of a gap between the gooseneck 109 and the coupling component 107. If the measurements of the torch neck 105 in the subsequent image violate a threshold or range of thresholds, such as the torch neck 105 depicted in FIG. 5C, a signal may be sent to the robot control system 112. In some examples, the threshold may be 0-.5 mm. The robot control system 112 may stop the welding in order for maintenance to be performed on the neck. In some examples, the maintenance may include notifying personnel that a neck inspection should be performed on the torch neck 105.

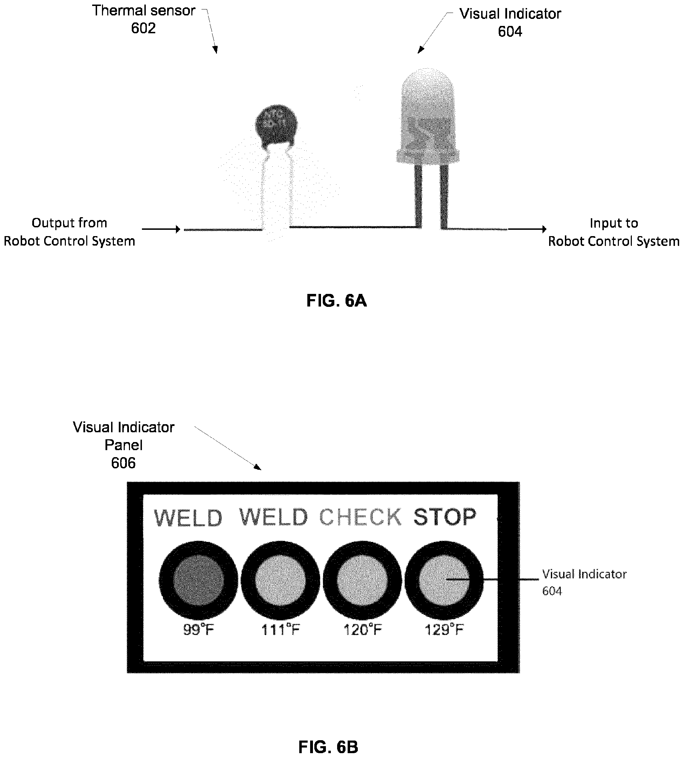

FIG. 6A illustrates an example application of a welding maintenance system including one or more thermal sensors 602. In some examples, the thermal sensor(s) 602 may be positioned in the welding torch 108, such as at the front of the neck, the back of the neck, a front cable (weld cable 226) connection, rear (weld cable 226) connection, other connection points of the weld cable 226, feeder adapter (e.g. power pin), contact tip, nozzle, or other consumables, or any combination thereof. In some examples, the thermal sensor(s) 602 may be placed within the weld cable 226, within the weld cable insulator, at connection points of the weld cable 226 (e.g., at a rotating power connector, at a weld cable connector, etc.), as non-limiting examples, in order to determine when the temperature of the weld cable 224 has exceeded a threshold temperature at a certain rate, within a certain period of time, a certain number of times within a time period, etc. In some examples, feedback to the robot control system 112 from the thermal sensor 602 may be provided by the weld cable or an insulated cord set external to the weld cable 224. In some examples, the thermal sensor 602 may be a thermal fuse, a thermocoupler, etc. used to detect thermal conditions of the welding torch 108. In some embodiments, the thermal sensor 602 may also include a visual indicator 604 for providing an indication that a threshold temperature has been reached. In some examples, the thermal sensor 602 may be configured to send a signal to the robot control system 112 when certain thermal conditions have been met. For example, if a threshold temperature is reached, a signal may be transmitted to the robot control system 112 with an indication of the temperature or an indication that a threshold temperature or range of threshold temperatures has been reached. In some examples, additional signals may be provided as different temperatures or temperature ranges are met, and/or signals may also be provided when a temperature meets a threshold value or range of threshold values.

In some examples, one or more cameras such as those illustrated in FIGs. 4A-4C may capture one or more visual indicators 604 of thermal conditions of the welding torch 108. In some examples, the visual indicators may be included in a visual indicator panel 606 to convey the visual indicator information. In some examples, the visual indicators panel 606 on the torch 108 may include values, colors, or other visual indicators of the thermal conditions of the torch 108. In some examples, the visual indicators 604 may be different colors, such as red, green, yellow, black, and/or gray, etc. to indicate whether a threshold temperature or range of temperatures has been met. In some embodiments, the visual indicators panel 606 provides information on whether a maintenance operation should be performed, whether a welding program or procedure should be disabled, interrupted, or reset, and/or whether the torch should be checked after a current welding program, procedure, and/or welding application has been completed.

In some examples, the visual indicators 604 may be representative of certain thermal conditions, such as certain temperatures, temperature ranges, or temperature thresholds. For example, a red indicator in a captured image may be interpreted by the robot control system 112 to immediately stop or interrupt a welding procedure and/or program. In some embodiments, the robot control system 112 may also and command the robotic manipulator to perform a reaming and/or spraying operation. In some examples, a yellow indicator may indicate to the robot control system 112 that welding should be stopped after the welding procedure/program is completed. In some examples, a green indicator may be interpreted by the robot control system 112 to continue welding but may also command the robotic manipulator to pause after a certain number of additional welds are performed or after a certain number of additional parts are welded, in order to perform a maintenance operation and/or notify personnel.

In some examples, the one or more camera(s) may comprise one or more thermal camera(s). In some examples, the thermal camera(s) may capture the thermal conditions of the torch and may compare the captured thermal conditions to one or more thresholds and/or range of thresholds. In some examples, a first threshold and/or range of thresholds may indicate to the robot control system 112 that maintenance should be performed after a welding procedure is completed. In some examples, a second threshold and/or range of thresholds may indicate that a welding procedure should be interrupted and/or reset. In some instances, a threshold and/or range of thresholds may indicate that the robot welding system 100 should be reset. In some examples, more than one visual indicator may be captured on the torch. A combination of visual indicators may be interpreted by the robot control system 112 to indicate whether the current weld may be completed or stopped, and whether the robot control system 112 may issue a command to perform a maintenance operation. For example, in some examples, reference images of acceptable and unacceptable configurations of thermal conditions may be stored, and captured images may be compared to the stored images to determine whether the captured images indicate that the consumable are at unacceptable thermal conditions (e.g., overheating or not within a tolerable range for welding) and require a maintenance operation. The images may be stored in the one or more memory device(s) 236 and the one or more storage device(s) 238 as described above with regards to FIG. 2

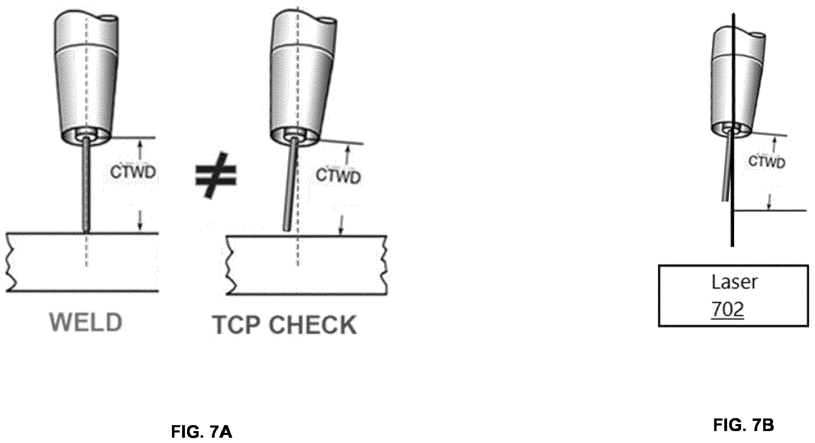

FIG. 7A illustrates an example application of the welding maintenance system for detecting a tool center point (TCP) of a welding torch 108. For example, TCP is the portion of the robot that contacts the workpiece. In some examples, the camera 402 may capture a reference image of the contact tip 102 at a fixed distance and compare a subsequent image to the reference image. In some examples, the Contact Tip to Work Distance (CTWD) may also be obtained from the images and used to determine whether a TCP check is needed. In some examples, a measurement may be taken from one or more images to calculate the TCP and/or CTWD. In some examples, the measurement may be a point at the end of the contact tip 102 relative to a baseline point. In some examples, if the TCP or CTWD is within a threshold or range of thresholds, the welding torch is commanded to continue to weld or is allowed to complete welding. In some examples, if the TCP or CTWD violates the threshold (i.e. is not at an acceptable value or within an acceptable range of values), the robot control system 112 may command the robotic arm to stop welding. In some examples, the threshold may be a distance, which may be between 0-.5 mm. In some examples, the robot control system 112 may also command the robotic arm to position itself for a TCP check. In some examples, one or more cameras, such as the cameras depicted in FIGs. 4A-4C, may be used to capture a TCP of the welding torch 108. In some examples, a TCP check can be performed by a laser 702 as described below in further detail with relation to FIG. 7B.

FIG. 7B illustrates an example welding maintenance system including a laser 702. In some examples, a laser 702 can be mounted on a wrist of a robot, on a reamer, near a reamer, near tooling, etc. In some examples, a laser is programmed with TCP threshold values or ranges of values. In some examples, the laser is set up to check if the TCP of the welding torch 108 is within a threshold or threshold range of values. If the TCP is within a threshold range of values, the welding application may continue.

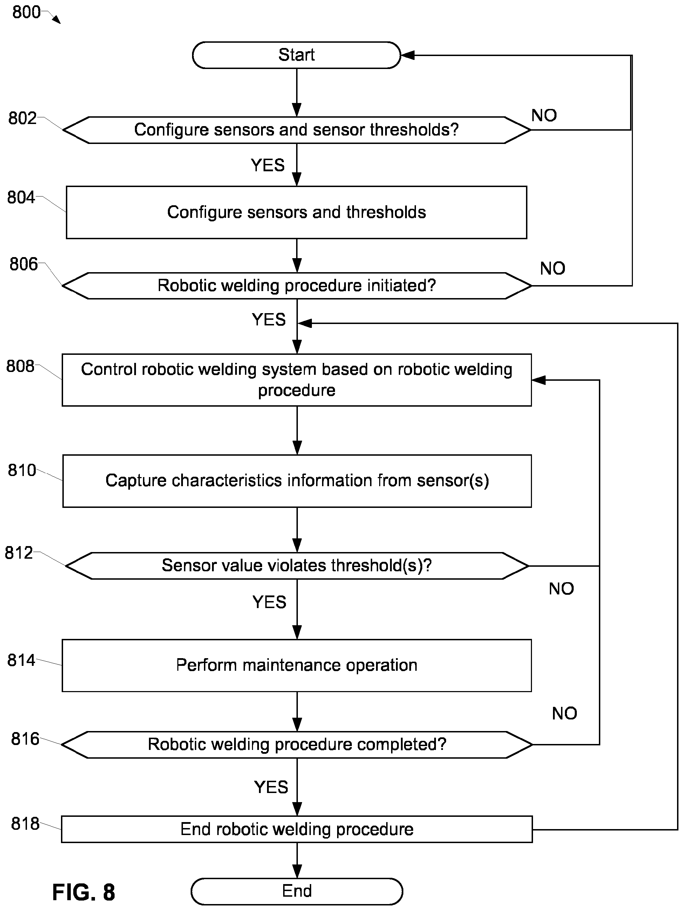

FIG. 8 illustrates an example welding maintenance system flowchart 800, in accordance with aspects of this disclosure. The example instructions 800 may be executed by, for example, the processor(s) 234 of FIG. 2. At block 802, the example robot control system 112 (e.g., via the processor(s) 234) determines whether sensor(s) and sensor thresholds are being configured. For example, the robot control system 112 may determine whether a programming device or other input device is being used to configure the sensor(s) 302. If the robot welding system 100 and sensor(s) 302 are being configured (block 802), at block 804 the robot control system 112 configures the sensor(s) and sensor thresholds, including storing reference images, threshold values, calibrating the sensor(s), etc.

If the sensor(s) are not being configured (block 802), or when the sensor(s) have been configured (block 804), at block 806 the robot control system 112 determines whether a robotic welding procedure has been initiated. The robotic welding procedure may be configured as an intermediate step or may have been previously configured, and the robotic welding procedure may be initiated based on an operator input (e.g., via the I/O device(s) 244), by securing of a clamp to hold the workpiece 114, and/or any other desired initiation input. If a robotic welding procedure has not been initiated (block 806), control returns to block 802 to continue configuration of the sensor(s).

When the robotic welding procedure has been initiated (block 806), at block 808 the robot control system 112 controls the robotic welding system 100 (e.g., the robotic manipulator 106, the power supply 110, the wire feeder 140, the shielding gas 142, and/or other equipment) based on the robotic welding procedure. For example, the robot control system 112 may provide commands based on instructions in the robotic welding procedure.

At block 810, the robot control system 112 captures characteristics information from the sensor(s). At block 812, the robot control system 112 determines whether any sensor values are above the thresholds values configured at block 804. For example, the robot control system 112 may continuously monitor captured sensor information or may check captured sensor information at a certain rate. If a sensor has not been identified that violates a threshold or range of thresholds (block 812), control returns to block 808 to continue controlling the robotic welding system 100.

When a sensor that violates a threshold is identified (block 812), at block 814 the robot control system 112 controls the robotic manipulator 106 to prepare for a maintenance operation. In some examples, a maintenance operation may be performed. In some examples, the robot control system 112 may also provide a notification(s) to personnel. The notification(s) may be via any type of audible, visual, haptic, tactile, and/or other perceptible feedback, and may be individually applied (e.g., selectively provided to personnel who may be in proximity or otherwise affected, such as by a personal device) or broadly applied (e.g., output to anyone close enough to perceive the notification).

At block 816, the robot control system 112 determines whether the robotic welding procedure is completed. In some examples, if the sensor thresholds are violated, the robot control system 112 may end the robotic welding procedure. In other examples, if the sensor thresholds are violated, maintenance is performed, and the robotic welding procedure is allowed to continue. If the robotic welding procedure is not completed, the robotic welding system 100 continues to perform welding per the robotic welding procedure at 808. When welding is completed (block 816), at block 818 the robot control system 112 ends the robotic welding procedure. The example instructions 800 then end. The method 800 may then repeat in a manner and/or frequency according to one or more instructions.

As utilized herein, "and/or" means any one or more of the items in the list joined by "and/or." As an example, "x and/or y" means any element of the three-element set {(x), (y), (x, y)}. In other words, "x and/or y" means "one or both of x and y." As another example, "x, y, and/or z" means any element of the seven-element set {(x), (y), (z), (x, y), (x, z), (y, z), (x, y, z)}. In other words, "x, y, and/or z" means "one or more of x, y and z". As utilized herein, the term "exemplary" means serving as a non-limiting example, instance, or illustration. As utilized herein, the terms "e.g." and "for example" set off lists of one or more non-limiting examples, instances, or illustrations. As utilized herein, circuitry is "operable" to perform a function whenever the circuitry comprises the necessary hardware and code (if any is necessary) to perform the function, regardless of whether performance of the function is disabled or not enabled (e.g., by an operator-configurable setting, factory trim, etc.).

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. For example, block and/or components of disclosed examples may be combined, divided, re-arranged, and/or otherwise modified. Therefore, the present method and/or system are not limited to the particular implementations disclosed. Instead, the present method and/or system will include all implementations falling within the scope of the appended claims, both literally and under the doctrine of equivalents.

Embodiments of the invention are described in the following numbered clauses:
1. A system for torch maintenance comprising:
   one or more sensors configured to monitor one or more conditions of a welding torch; and
   control circuitry configured to:
      receive feedback corresponding to the one or more conditions from the one or more sensors;
      determine that the feedback received from the one or more sensors violates one or more thresholds; and
      command the system to prepare for torch maintenance when the feedback violates the one or more thresholds.
2. The system of clause 1, wherein the one or more sensors comprises a camera configured to obtain one or more images.
3. The system of clause 2, wherein the camera comprises one or more apertures and is further configured to obtain the one or more images using the one or more apertures based on the one or more conditions being monitored.
4. The system of clause 1, wherein the one or more sensors includes a camera or an optical sensor mounted on a helmet.
5. The system of clause 1, wherein the one or more conditions is a measurement of wear of a tip bore, and the one or more thresholds correspond to an amount of wear on the tip bore.
6. The system of clause 1, wherein the one or more conditions is a measurement of wear of a torch nozzle, the one or more thresholds corresponding to an amount of wear on the torch nozzle.
7. The system of clause 1, wherein the one or more sensors comprises a camera and the one or more conditions comprise a gap between a gooseneck and a coupling component.
8. The system of clause 1, wherein the one or more sensors is a thermal sensor configured to monitor a temperature of the welding torch or welding cable, and the feedback is provided via an insulated cord set.
9. The system of clause 1, wherein the one or more sensors comprises a camera configured to monitor one or more visual indicators related to a temperature of the welding torch.
10. The system of clause 8, wherein the control circuitry is further configured to:
   receive a signal corresponding to the one or more visual indicators; and
   command the system to stop welding.
11. The system of clause 8, wherein the control circuitry is further configured to command the system to pause for maintenance after a welding procedure in response to the one or more visual indicators.
12. The system of clause 1, wherein the one or more conditions is a tool center point measurement.
13. The system of clause 1, wherein the one or more sensors is a camera or an optical sensor configured to monitor a tool center point measurement.
14. The system of clause 1, wherein the one or more sensors is a laser configured to monitor a tool center point measurement.
15. The system of clause 1, wherein the control circuitry is further configured to provide a notification to a user when the one or more thresholds are violated.
16. The system of clause 1, wherein the control circuitry is configured to command the system to prepare the welding torch for maintenance by at least one of: sending a command to disable welding, sending a command to interrupt a welding procedure, sending a command to reset the welding procedure or the system, sending a command to position the welding torch for the maintenance that will be performed, and sending a notification to an operator.
17. A welding system, comprising:
   a welding torch;
   one or more sensors configured to monitor one or more conditions of the welding torch; and
   control circuitry configured to:
      receive feedback corresponding to the one or more conditions from the one more sensors;
      determine that the feedback received from the one or more sensors violates one or more threshold values; and
      command the welding system to prepare for torch maintenance when the feedback violates the one or more threshold values.

## Claims

1. A system for torch maintenance comprising:
one or more sensors configured to monitor one or more conditions of a welding torch; and
control circuitry configured to:
receive feedback corresponding to the one or more conditions from the one or more sensors;
determine that the feedback received from the one or more sensors violates one or more thresholds; and
command the system to prepare for torch maintenance when the feedback violates the one or more thresholds.

2. The system of claim 1, wherein the one or more sensors comprises a camera configured to obtain one or more images.

3. The system of claim 2, wherein the camera comprises one or more apertures and is further configured to obtain the one or more images using the one or more apertures based on the one or more conditions being monitored.

4. The system of any preceding claim, wherein the one or more sensors includes a camera or an optical sensor mounted on a helmet.

5. The system of any preceding claim, wherein the one or more conditions is a measurement of wear of a tip bore, and the one or more thresholds correspond to an amount of wear on the tip bore.

6. The system of any preceding claim, wherein the one or more conditions is a measurement of wear of a torch nozzle, the one or more thresholds corresponding to an amount of wear on the torch nozzle.

7. The system of any preceding claim, wherein the one or more sensors comprises a camera and the one or more conditions comprise a gap between a gooseneck and a coupling component.

8. The system of any preceding claim, wherein the one or more sensors is a thermal sensor configured to monitor a temperature of the welding torch or welding cable, and the feedback is provided via an insulated cord set.

9. The system of any preceding claim, wherein the one or more sensors comprises a camera configured to monitor one or more visual indicators related to a temperature of the welding torch.

10. The system of claim 8, wherein the control circuitry is further configured to:
receive a signal corresponding to the one or more visual indicators; and
command the system to stop welding.

11. The system of claim 8, wherein the control circuitry is further configured to command the system to pause for maintenance after a welding procedure in response to the one or more visual indicators.

12. The system of any preceding claim, wherein the one or more conditions is a tool center point measurement, optionally wherein the one or more sensors is a camera or an optical sensor configured to monitor a tool center point measurement, optionally wherein the one or more sensors is a laser configured to monitor a tool center point measurement.

13. The system of any preceding claim, wherein the control circuitry is further configured to provide a notification to a user when the one or more thresholds are violated.

14. The system of any preceding claim, wherein the control circuitry is configured to command the system to prepare the welding torch for maintenance by at least one of: sending a command to disable welding, sending a command to interrupt a welding procedure, sending a command to reset the welding procedure or the system, sending a command to position the welding torch for the maintenance that will be performed, and sending a notification to an operator.

15. A welding system, comprising:
a welding torch;
one or more sensors configured to monitor one or more conditions of the welding torch; and
control circuitry configured to:
receive feedback corresponding to the one or more conditions from the one more sensors;
determine that the feedback received from the one or more sensors violates one or more threshold values; and
command the welding system to prepare for torch maintenance when the feedback violates the one or more threshold values.
